# EUROPÄISCHE PATENTSCHRIFT

(11) **EP 2 592 393 B1**
(45) Veröffentlichungstag und Bekanntmachung des Hinweises auf die Patenterteilung: **22.11.2017**
(21) Anmeldenummer: 12007439.8
(22) Anmeldetag: 30.10.2012
(51) Int. Cl.: G01F 1/26, G01F 1/24, F16K 37/00, F16K 39/02, F16K 15/06, G01F 1/28, G01F 15/00, G01F 15/02

(54) **Elektromechanischer Schalter und Fluidzähler**
Electromechanical switch and fluid counter
Commutateur électromécanique et compteur de fluide

(30) Priorität: 07.11.2011 DE 102011117732
(43) Veröffentlichungstag der Anmeldung: 15.05.2013
(73) Patentinhaber: Sensus Spectrum LLC, Raleigh, NC 27615 (US)
(72) Erfinder: Schäfer, Burghard, 67112 Mutterstadt (DE); Chu, Anh Tuan, 67071 Ludwigshafen (DE)
(74) Vertreter: Patentanwälte Dr. Keller, Schwertfeger

(56) Entgegenhaltungen:
- WO-A2-2004/094978
- DE-U1-202006 018 420
- US-A- 5 419 191

## Beschreibung

Die vorliegende Anmeldung betrifft eine Anordnung bestehend aus einem elektromechanischen Schalter zum Anordnen in einem von einem Fluid durchströmten Rohr und einem Fluidzähler, wobei der elektromechanische Schalter mit dem Fluidzähler verbunden ist.

Fluidzähler, insbesondere elektronische Wasserzähler, dienen dazu, den Durchfluss eines Fluids durch einen Rohrabschnitt und somit die über einen Zeitabschnitt kumulierte Durchflussmenge eines Fluids durch den Rohrabschnitt zu bestimmen. Da sich die Strömungsgeschwindigkeit bzw. der Durchfluss des Fluids durch den Rohrabschnitt in kurzen Zeitabständen stark verändern kann, ist für eine präzise Angabe der über einen Zeitabschnitt kumulierten Durchflussmenge eine kurze Taktrate für die Messung des Durchflusses erforderlich. Messungen mit einer hohen Taktrate bedeuten jedoch einen hohen Energieverbrauch seitens des Fluidzählers. Da Fluidzähler in der Regel mit Batterien betrieben werden, müssen an die Kapazität der Batterien somit hohe Anforderungen gestellt werden, wodurch die Batterien sehr teuer werden.

Elektromechanische Schalter sind bereits bekannt. Ein elektromechanischer Schalter wird beispielsweise in der WO2004/094978 A2 beschrieben. Der elektromechanische Schalter der WO2004/094978 A2 dient dazu, um Leckströme in einem Verteilersystem zu erfassen und umfasst ein Hauptventil mit einer ersten Kolbenstange, in dem zentrisch eine zweite Kolbenstange eines zweiten Ventils angeordnet ist. In Abhängigkeit des Durchflusses werden die Kolbenstangen verschoben. Die Positionsänderungen der beiden Kolbenstangen werden erfasst, wobei die jeweilige Position der Kolbenstangen einen Hinweis auf einen vorbestimmten Zustand gibt.

Bei einer weiteren Anwendung werden elektromechanische Schalter verwendet, um die Quellen und Arten verschiedener Ströme zu unterscheiden. So wird in der US2008/0224877 A1 ein elektromechanischer Schalter beschriebenen, mit dessen Hilfe erkannt werden kann, ob ein Wasserfluss von einer Sprinkleranlage oder aus dem Hausgebrauch kommt. Hierfür ist ein Hauptrückschlagventil mit einem zweiten Rückschlagventil gekoppelt.

Gekoppelte Ventile mit einem Hauptrückschlagventil und einem zweiten Rückschlagventil werden beispielsweise auch in den Dokumenten EP 0 084 225 B1, US 4,763,114 A, US 3,651,827 A, DE 1 773 073 und US 6,121,884 A beschrieben.

Es ist Aufgabe der vorliegenden Erfindung, eine Vorrichtung bereitzustellen, die es ermöglicht, unter Beibehaltung der Messgenauigkeit den Energieverbrauch eines Fluidzählers zu verringern.

Erfindungsgemäß wird diese Aufgabe durch eine Anordnung bestehend aus einem elektromechanischen Schalter zum Anordnen in einem von einem Fluid durchströmten Rohr und einem Fluidzähler gelöst, wobei der elektromechanische Schalter mit dem Fluidzähler verbunden ist und ein Hauptrückschlagventil mit einem Hauptschließelement, das durch das Fluid auslenkbar ist, und einem Hauptrückstellmittel, umfasst sowie ein zweites Rückschlagventil mit einem zweiten Schließelement, das durch das Fluid auslenkbar ist, und einem zweiten Rückstellmittel, wobei das zweite Rückschlagventil in dem Hauptrückschlagventil angeordnet ist und wobei das zweite Rückstellmittel eine geringere Rückstellkraft aufweist als das Hauptrückstellmittel, ein Erfassungselement zur Erfassung der Position eines zweiten Schließelements und ein Steuerelement zum Ein- oder Ausschalten des Fluidzählers in Abhängigkeit von der vom Erfassungselement erfassten Position des zweiten Schließelements .

Unter Rückstellkraft ist hier die Kraft zu verstehen, die aufgewendet werden muss, um das Rückstellmittel aus seiner Ruheposition zu bewegen.

Mithilfe der erfindungsgemäßen Anordnung lässt sich ein Fluidzähler immer nur dann einschalten, wenn ein tatsächlicher Durchfluss eines Fluids vorhanden ist. In den Zeiten, in denen kein Fluid durch ein Rohrleitungsabschnitt strömt, ist der Fluidzähler ausgeschaltet. Somit kann der Energieverbrauch des Fluidzählers deutlich reduziert werden.

Da die Durchflussmenge eines Fluids durch einen Rohrabschnitt und somit die Strömungsgeschwindigkeit eines Fluid durch einen Rohrabschnitt eine große Schwankungsbreite aufweist, müssen Fluidzähler geeignet sein, sowohl geringe Durchflüsse bzw. Strömungsgeschwindigkeiten als auch hohe Durchflüsse bzw. Strömungsgeschwindigkeiten präzise zu erfassen. D.h. der elektromechanische Schalter muss einerseits empfindlich auf geringe Durchsätze des Fluids reagieren, andererseits aber auch eine ausreichende Robustheit und geringen Druckverlust bei hohen Strömungsgeschwindigkeiten aufweisen.

Um bereits einen geringen Durchfluss eines Fluids zu erfassen, weist daher das zweite Rückstellmittel eine geringere Rückstellkraft auf als das Hauptrückstellmittel. Eine Auslenkung eines Schließelements, nämlich des zweiten Schließelements, kann somit bereits bei geringen Durchflüssen erfolgen, so dass der Schalter bereits bei geringen Durchflüssen arbeitet. Eine Auslenkung des Hauptrückstellmittels erfolgt dann, wenn der Durchfluss des Fluids einen vorbestimmten Wert überschreitet. Auf diese Weise wird das zweite Schließelement darüber hinaus bei hohen Durchflüssen des Fluids entlastet und die Gefahr, dass das zweite Schließelement bzw. Rückstellmittel aufgrund des hohen Druckes des Fluids verformt wird, verhindert.

Bei einer bevorzugten Ausführungsform sind das Hauptelement und das zweite Schließelement jeweils als Platte, insbesondere als runde Platte ausgebildet. Diese Ausführungsform hat den Vorteil, dass die Schließelemente eine große Angriffsfläche für das Fluid bieten und die Kraft der Fluidströmung auf die Rückschlagventile gut übertragen werden.

Es ist weiter von Vorteil, dass das Hauptschließelement eine Aussparung ausweist, die von dem zweiten Schließelement vollständig bedeckbar ist. Somit bilden das Hauptrückschlagventil und das zweite Rückschlagventil eine Einheit, die sicher gewährleistet, dass keine Rückströmung durch den Schalter hindurchfließt.

Hierbei ist es besonders bevorzugt, dass das zweite Schließelement im Wesentlichen konzentrisch in dem ersten Schließelement angeordnet ist. Hiermit wird eine gleichmäßige Kräfteverteilung auf die Schließelemente gewährleistet.

Bei einer bevorzugten Ausführungsform ist das Erfassungselement im zweiten Rückschlagventil, insbesondere im zweiten Schließelement, angeordnet. Sobald eine Änderung der Position des Schließelements des zweiten Rückschlagsventils erfasst wird, kann der erfindungsgemäße Schalter einen Fluidzähler einschalten, sodass der Fluidzähler auch geringe Durchflüsse erfassen kann.

Bei einer Ausführungsform weisen das Hauptrückschlagventil und das zweite Rückschlagventil jeweils ein Kolben und eine Feder auf. Bei einer alternativen Ausführungsform weisen das Hauptrückschlagsventil und das zweite Rückschlagsventil jeweils einen Kolben und einen Magneten auf.

Die Erfindung betrifft ferner ein Verfahren zur Bestimmung des Durchflusses eines Fluids durch einen Rohrabschnitt mit Hilfe einer Anordnung nach einem der Ansprüche 1 bis 8.

Eine bevorzugte Ausführungsform der Erfindung wird anhand der beigefügten Zeichnungen näher erläutert, in denen zeigen:
- Figur 1:: den Querschnitt durch einen elektromechanischen Schalter in einem Rohrabschnitt
- Figur 2:: eine Draufsicht auf den elektromechanischen Schalter in Strömungsrichtung eines Fluids.

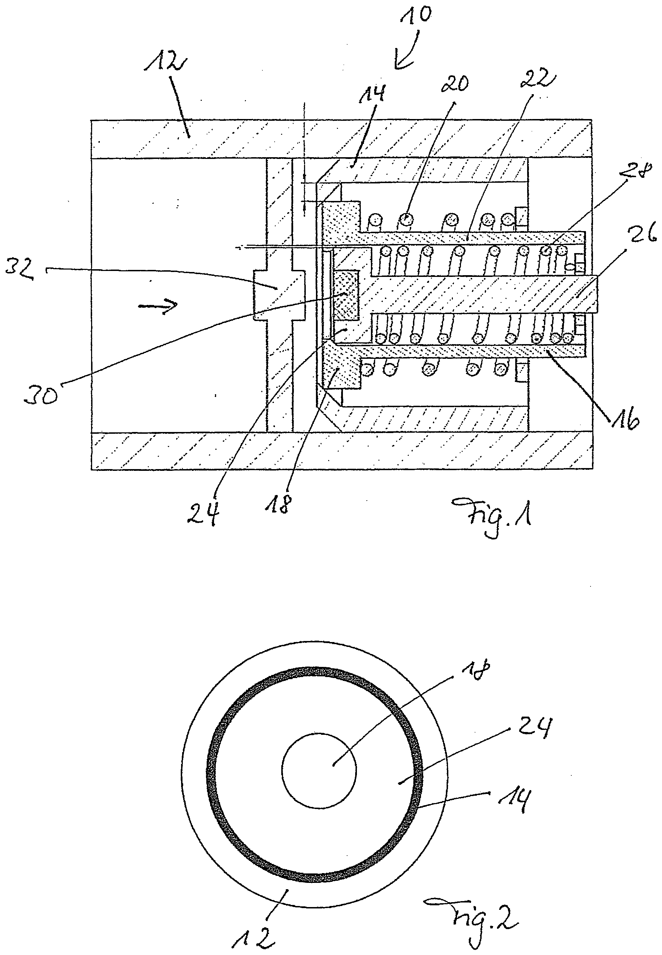

Figur 1 zeigt einen elektromechanischen Schalter 10 in einem Rohrabschnitt 12, der von einem Fluid durchströmbar ist. Die Strömungsrichtung des Fluids ist durch den Pfeil angedeutet. Der elektromechanische Schalter 10 umfasst ein Hauptrückschlagventil 14 und ein zweites Rückschlagventil 16, wobei das zweite Rückschlagventil 16 in dem Hauptrückschlagventil 14 angeordnet ist. Das Hauptrückschlagventil 14 umfasst ein Hauptschließelement 18 und ein Hauptrückstellmittel 20 in Form einer Feder, wobei das Hauptschließelement 18 an einem Ende eines Hohlzylinders 22 einstückig ausgebildet und die Feder 22 außen um den Hohlzylinder 22 angeordnet ist. Im Innern des Hohlzylinders 22 ist das zweite Rückschlagventil 16 aufgenommen. Wie in Fig. 2 zu erkennen ist, ist das Hauptschließelement 18 als Scheibe mit einer konzentrischen Aussparung ausgebildet.

Das zweite Rückschlagventil 16 weist ein zweites Schließelement 24 und einen Schaft 26 auf, um den das zweite Rückstellmittel 28 in Form einer Feder angeordnet ist. Das zweite Schließelement 24 ist einstückig mit dem Schaft 26 verbunden. Ein Erfassungselement 30 ist im Schließelement 24 angeordnet.

Das Erfassungselement 30 dient dazu, die Position des zweiten Schließelements 24 zu erfassen. Die vom Erfassungselement 30 erfasste Position des zweiten Schließelements 24 wird an einen Empfänger 32 weitergegeben. Der Empfänger 32 steht wiederum in Verbindung mit einem nicht dargestellten Steuerelement zum Ein- oder Ausschalten eines nichtdargestellten Fluidzählers.

In Figur 2 ist der in Figur 1 dargestellte Schalter in Strömungsrichtung von vorne gezeigt. In Figur 2 ist zu erkennen, dass das zweite Schließelement 24 scheibenartig ausgebildet ist und im Wesentlichen konzentrisch in der Aussparung des Hauptschließelements 18 angeordnet ist.

Die Rückstellkraft der zweiten Feder 28 ist geringer als die der Hauptfeder 20.

Strömt nun ein Fluid mit einer geringen Strömungsgeschwindigkeit durch den Rohrabschnitt 12, trifft dieses auf den elektromechanischen Schalter 10. Weist das Fluid aufgrund seiner Strömungsgeschwindigkeit einen vorgegebenen Mindestdruck auf, wird das zweite Schließelement 24 aus seiner Ruheposition ausgelenkt und das Fluid kann durch den elektromechanischen Schalter 10 fließen. Die Auslenkung des zweiten Schließelements 24 wird von dem Erfassungselement 30 erfasst und an einen Empfänger 32 weitergegeben, der mittels der nicht dargestellten Steuereinheit ein Signal an einen nicht dargestellten Fluidzähler gibt, mit der Messung zu beginnen. Unterschreitet das Fluid den notwendigen Druck auf das zweite Rückstellmittel 24, kehrt das zweite Rückschlagventil wieder in seine Ruheposition zurück und der Empfänger 32 sendet ein Signal an die Steuereinheit, den Fluidzähler auszuschalten, um die Messung zu stoppen.

Mit steigender Strömungsgeschwindigkeit des Fluids nimmt der Druck auf das zweite Rückschlagventil 16 zu, sodass das zweite Schließelement 24 bis zu seinem Anschlag ausgelenkt wird. Eine weitere Zunahme der Strömungsgeschwindigkeit und des damit verbundenen Drucks auf das zweite Rückschlagventil würde nun dazu führen, dass sich der Druckverlust in dem Rohrleitungsabschnitt 10 in Strömungsrichtung vor dem Schalter erhöht. Ist der Fluidzähler in Strömungsrichtung vor dem Schalter 10 angeordnet, führt dies dazu, dass der Druckverlust im Fluidzähler auf einen Wert ansteigt, der ein maximal erlaubtes Maß überschreitet.

Aus diesem Grund ist das Hauptrückschlagventil 14 vorgesehen, das sich öffnet, wenn der Druck des Fluids einen entsprechenden vorgegebenen Wert erreicht, der deutlich über dem Mindestwert liegt. Bei hohen Strömungsgeschwindigkeiten, d. h. bei hohen Drücken sind somit beide Schließelemente 24 und 18 ausgelenkt, sodass das Fluid im Wesentlichen ungehindert durch den Schalter 10 durchströmen kann.

Mithilfe des dargestellten Schalters können einerseits geringe Durchflüsse sicher erfasst werden und andererseits ist ein Einsatz dieses Schalters auch bei hohen Durchflüssen möglich, so dass ein mit dem Schalter verbundener Fluidzähler präzise die kumulierte Durchflussmenge über einen vorgegebenen Zeitraum bestimmen kann. Dadurch dass in den Zeiten, in denen kein Fluid durch den Rohrabschnitt strömt, keine Messung des Durchflusses durch den Fluidzähler erfolgt, ist der Stromverbrauch des Fluidzählers deutlich reduziert. Insbesondere bei der Verwendung von Batterien als Stromquelle führt dies zu einer deutlichen Verlängerung der Lebenszeit der Batterie.

Anstelle des dargestellten Hauptrückschlagventils und des zweiten Rückschlagventils mit einem Kolben und einer Feder ist auch die Verwendung eines Magneten anstelle der Feder möglich.

## Patentansprüche

1. Anordnung bestehend aus einem elektromechanischen Schalter zum Anordnen in einem von einem Fluid durchströmten Rohr und einem Fluidzähler, wobei der elektromechanische Schalter mit dem Fluidzähler verbunden ist und wobei der elektromechanische Schalter umfasst:
ein Hauptrückschlagventil (14) mit einem Hauptschließelement (18), das durch das Fluid auslenkbar ist, und einem Hauptrückstellmittel (20),
ein zweites Rückschlagventil (16) mit einem zweiten Schließelement (24), das durch das Fluid auslenkbar ist, und einem zweiten Rückstellmittel (28), wobei das zweite Rückschlagventil (16) in dem Hauptrückschlagventil (14) angeordnet ist und wobei das zweite Rückstellmittel (28) eine geringere Rückstellkraft aufweist als das Hauptrückstellmittel (20),
ein Erfassungselement (30) zur Erfassung der Position des zweiten Schließelements (24) und
ein Steuerelement zum Ein- und Ausschalten des Fluidzählers in Abhängigkeit von der vom Erfassungselement (30) erfassten Position des zweiten Schließelements (24).

2. Anordnung nach einem der vorhergehenden Ansprüche, **dadurch gekennzeichnet, dass** das Hauptschließelement (18) und das zweite Schließelement (24) jeweils als Platte, insbesondere als runde Platte, ausgebildet sind.

3. Anordnung nach einem der vorhergehenden Ansprüche, **dadurch gekennzeichnet, dass** das Hauptschließelement (18) eine Aussparung aufweist, die von dem zweiten Schließelement (24) vollständig bedeckbar ist.

4. Anordnung nach Anspruch 3, **dadurch gekennzeichnet, dass** das zweite Schließelement (24) im Wesentlichen konzentrisch in dem Hauptschließelement (18) angeordnet ist.

5. Anordnung nach einem der vorhergehenden Ansprüche, **dadurch gekennzeichnet, dass** das Erfassungselement (30) im zweiten Rückschlagventil, insbesondere im zweiten Schließelement (24), angeordnet ist.

6. Anordnung nach einem der vorhergehenden Ansprüche, **dadurch gekennzeichnet, dass** das Hauptrückschlagventil (14) und das zweite Rückschlagventil (16) jeweils einen Kolben und eine Feder aufweisen.

7. Anordnung nach einem der Ansprüche 1 bis 6, **dadurch gekennzeichnet, dass** das Hauptrückschlagventil und das zweite Rückschlagventil jeweils einen Kolben und Magneten aufweisen.

8. Verfahren zur Bestimmung des Durchflusses eines Fluids durch einen Rohrabschnitt mit Hilfe einer Anordnung nach einem der vorhergehenden Ansprüche, wobei das Verfahren die folgende Schritte umfasst:
- Erfassen der Position des zweiten Schließelements (24) mittels des Erfassungselements (30), wobei das zweite Rückschlagventil (16) in dem Hauptrückschlagventil (14) angeordnet ist und das zweite Rückstellmittel (28) eine geringere Rückstellkraft aufweist als das Hauptrückstellmittel (20);
- Ausschalten einer Stromversorgung für den Fluidzähler, wenn sich das zweite Schließelement (24) im Wesentlichen in seiner Ruhestellung befindet;
- Einschalten der Stromversorgung für den Fluidzähler, wenn sich das zweite Schließelement (24) um einen vorgegebenen Längenabschnitt aus der Ruheposition verschoben hat, und Erfassen des Durchflusses des Fluids durch den Rohrabschnitt mittels des Fluidzählers.

9. Verfahren nach Anspruch 8, **dadurch gekennzeichnet, dass** das Hauptschließelement (18) geöffnet wird, wenn der Durchfluss des Fluids einen vorgegebenen Wert überschreitet.

## Claims

1. Arrangement consisting of an electromechanical switch for arranging in a pipe through which a fluid flows and a fluid meter, wherein the electromechanical switch is connected to the fluid meter and wherein the electromechanical switch comprises:
a main non-return valve (14) comprising a main closure element (18) that can be deflected by means of the fluid, and a main restoring means (20);
a second non-return valve (16) comprising a second closure element (24) that can be deflected by means of the fluid, and a second restoring means (28), wherein the second non-return valve (16) is arranged in the main non-return valve (14) and wherein the second restoring means (28) has a smaller restoring force than the main restoring means (20);
a detection element (30) for detecting the position of the second closure element (24); and
a control element for switching the fluid meter on and off depending on the position of the second closure element (24) detected by the detection element (30).

2. Arrangement according to any of the preceding claims, **characterised in that** the main closure element (18) and the second closure element (24) are each designed as plates, in particular as circular plates.

3. Arrangement according to any of the preceding claims, **characterised in that** the main closure element (18) comprises a groove which can be completely covered by the second closure element (24).

4. Arrangement according to claim 3, **characterised in that** the second closure element (24) is arranged substantially concentrically in the main closure element (18).

5. Arrangement according to any of the preceding claims, **characterised in that** the detection element (30) is arranged in the second non-return valve, in particular in the second closure element (24).

6. Arrangement according to any of the preceding claims, **characterised in that** the main non-return valve (14) and the second non-return valve (16) each comprise a piston and a spring.

7. Arrangement according to any of claims 1 to 6, **characterised in that** the main non-return valve and the second non-return valve each comprise a piston and magnets.

8. Method for determining the flow of a fluid through a pipe segment using an arrangement according to any of the preceding claims, wherein the method comprises the following steps:
- detecting the position of the second closure element (24) by means of the detection element (30), wherein the second non-return valve (16) is arranged in the main non-return valve (14) and the second restoring means (28) has a smaller restoring force than the main restoring means (20);
- switching off a power supply for the fluid meter if the second closure element (24) is substantially in its rest position;
- switching on the power supply for the fluid meter if the second closure element (24) has moved out of the rest position by a predetermined length, and detecting the flow of fluid through the pipe segment by means of the fluid meter.

9. Method according to claim 8, **characterised in that** the main closure element (18) is opened if the flow of fluid exceeds a predetermined value.

## Revendications

1. Ensemble composé d'un commutateur électromécanique destiné à être disposé dans un tuyau parcouru par un fluide et d'un compteur de fluide, dans lequel le commutateur électromécanique est relié au compteur de fluide et dans lequel le commutateur électromécanique comprend :
un clapet de retenue principal (14) avec un élément de fermeture principal (18), qui peut être dévié par le fluide, et un moyen de rappel principal (20),
un deuxième clapet de retenue (16) avec un deuxième élément de fermeture (24), qui peut être dévié par le fluide, et un deuxième moyen de rappel (28), le deuxième clapet de retenue (16) étant disposé dans le clapet de retenue principal (14) et le deuxième moyen de rappel (28) présentant une force de rappel plus faible que le moyen de rappel principal (20),
un élément de détection (30) pour détecter la position du deuxième élément de fermeture (24) et
un élément de commande pour activer ou désactiver le compteur de fluide en fonction de la position du deuxième élément de fermeture (24) détectée par l'élément de détection (30).

2. Ensemble selon l'une des revendications précédentes, **caractérisé en ce que** l'élément de fermeture principal (18) et le deuxième élément de fermeture (24) sont chacun réalisés sous la forme d'une plaque, en particulier d'une plaque ronde.

3. Ensemble selon l'une des revendications précédentes, **caractérisé en ce que** l'élément de fermeture principal (18) présente un évidement qui peut être entièrement recouvert par le deuxième élément de fermeture (24).

4. Ensemble selon la revendication 3, **caractérisé en ce que** le deuxième élément de fermeture (24) est disposé sensiblement concentriquement dans l'élément de fermeture principal (18).

5. Ensemble selon l'une des revendications précédentes, **caractérisé en ce que** l'élément de détection (30) est disposé dans le deuxième clapet de retenue, en particulier dans le deuxième élément de fermeture (24).

6. Ensemble selon l'une des revendications précédentes, **caractérisé en ce que** le clapet de retenue principal (14) et le deuxième clapet de retenue (16) présentent chacun un piston et un ressort.

7. Ensemble selon l'une des revendications 1 à 6, **caractérisé en ce que** le clapet de retenue principal et le deuxième clapet de retenue présentent chacun un piston et un aimant.

8. Procédé de détermination du débit d'un fluide à travers une section de tuyau à l'aide d'un ensemble selon l'une des revendications précédentes, lequel procédé comprend les étapes suivantes :
- détection de la position du deuxième élément de fermeture (24) au moyen de l'élément de détection (30), le deuxième clapet de retenue (16) étant disposé dans le clapet de retenue principal (14) et le deuxième moyen de rappel (28) présentant une force de rappel plus faible que le moyen de rappel principal (20) ;
- coupure d'une alimentation électrique pour le compteur de fluide lorsque le deuxième élément de fermeture (24) se trouve sensiblement dans sa position de repos ;
- établissement de l'alimentation électrique pour le compteur de fluide lorsque le deuxième élément de fermeture (24) s'est déplacé d'une section de longueur prédéfinie à partir de la position de repos, et détection du débit du fluide à travers la section de tuyau au moyen du compteur de fluide.

9. Procédé selon la revendication 8, **caractérisé en ce que** l'élément de fermeture principal (18) s'ouvre lorsque le débit du fluide dépasse une valeur prédéfinie.
